# EUROPÄISCHE PATENTSCHRIFT

(11) **EP 2 057 104 B1**
(45) Veröffentlichungstag und Bekanntmachung des Hinweises auf die Patenterteilung: **01.09.2010**
(21) Anmeldenummer: 07786617.6
(22) Anmeldetag: 08.08.2007
(51) Int. Cl.: C04B 35/10, C04B 35/66, C06B 35/00

(54) **GEBRANNTES FEUERFESTES KERAMISCHES PRODUKT**
FIRED REFRACTORY CERAMIC PRODUCT
PRODUIT EN CÉRAMIQUE CALCINÉE RÉFRACTAIRE

(30) Priorität: 28.08.2006 DE 102006040269
(43) Veröffentlichungstag der Anmeldung: 13.05.2009
(73) Patentinhaber: Refractory Intellectual Property GmbH & Co. KG, 1100 Wien (AT)
(72) Erfinder: DJURICIC, Boro, A-8700 Leoben (AT); REITERER, Franz, A-8700 Leoben (AT)
(74) Vertreter: Becker, Thomas
(86) Internationale Anmeldenummer: PCT/EP2007/007000
(87) Internationale Veröffentlichungsnummer: WO 2008/025441

(56) Entgegenhaltungen:
- EP-A2- 0 004 509
- WO-A-2007/006350
- DE-A1- 2 609 251
- DE-A1- 10 054 125
- KO Y-C: "Influence of the total fines content on the thermal shock damage resistance of Al2O3-spinel castables" CERAMICS INTERNATIONAL, ELSEVIER, AMSTERDAM, NL, Bd. 27, Nr. 5, 2001, Seiten 501-507, XP004246233 2001 ISSN: 0272-8842

## Beschreibung

Die Erfindung betrifft ein gebranntes feuerfestes keramisches Produkt. Erfindungsgemäß fallen unter diesen Gattungsbegriff sowohl geformte wie ungeformte Produkte. Geformte Produkte sind solche, die eine definierte Form aufweisen, so dass sie beim Hersteller fertig konfektioniert werden können. Zu den geformten Produkten zählen: Steine (bricks), Ausgüsse (nozzles), Rohre (tubes), Stopfen (stoppers), Platten (plates) etc. Der Begriff ungeformte Produkte inkludiert solche, die meist beim Anwender aus einer entsprechenden Masse erstellt werden. Hierzu gehören Böden von Ofenaggregaten, die aus einer Masse gegossen werden, aber auch Reparaturmassen etc.

Die geformten Produkte können gebrannt oder ungebrannt zum Anwender geliefert werden. Wie die ungeformten Produkte so werden auch die geformten Produkte spätestens bei ihrer Verwendung gebrannt, indem sie mindestens bis zu Temperaturen, bei denen die Versatzkomponenten sintern, erhitzt werden.

In diesem Zusammenhang umfasst der Begriff refraktäres Versatz-Material sowohl Werkstoffe, die bereits feuerfeste Eigenschaften aufweisen, als auch Werkstoffe, die erst während/nach der Temperaturbehandlung (dem Brand) feuerfest werden.

Feuerfeste keramische Produkte der genannten Art sind seit langem in zahlreichen Ausführungsformen bekannt. Die Anforderungen an solche Produkte richten sich nach der jeweiligen Anwendung. Grundsätzlich wird eine hohe Temperaturbeständigkeit verlangt. Zur Auskleidung von Zement-Drehrohröfen genügen häufig Produkte, die bis zu 1.300° C temperaturbeständig sind. Feuerfeste keramische Produkte für metallurgische Anwendungen (Auskleidung von Schmelzgefäßen, Ausgüsse, Stopfen, Gasspülsteine etc.) weisen üblicherweise eine Temperaturbeständigkeit von mindestens 1.400 bis 1.700° C auf. Die Feuerfestigkeit von Produkten zur Auskleidung von Müllverbrennungsanlagen liegt üblicherweise zwischen 1300°C und 1500°C. Eine Temperaturbeständigkeit von über 1.700° C wird beispielsweise für folgende Anwendungen verlangt: Glasschmelzwannen, Aggregate zur Herstellung und Behandlung von Metallschmelzen.

Weitere wesentliche Eigenschaftsmerkmale sind: Thermoschockbeständigkeit, Korrosionsverhalten, Gefügeelastizität, Druckerweichen, Gasdurchlässigkeit, Kaltdruckfestigkeit nach Temperaturwechseln, Heißbiegefestigkeit.

Auch insoweit sind die spezifischen Produktanforderungen von den spezifischen Anwendungen abhängig. Beispielsweise in Öfen, wie Vergasungs- und/oder Verbrennungsanlagen, zum Beispiel Müllverbrennungsanlagen, oder in Gewölben von Glasschmelzwannen, spielt die Gasdurchlässigkeit der feuerfesten keramischen Produkte eine große Rolle. Es wird eine niedrige Gasdurchlässigkeit angestrebt, um eine Korrosion der feuerfesten keramischen Produkte durch Infiltrieren aggressiver Gasbestandteile zu vermeiden.

Für Produkte zur Auskleidung von Glasschmelzwannen, und zwar dort, wo eine Glasschmelze Kontakt zum Feuerfestmaterial hat, gelten andere Kriterien: Glaswannen werden meist mit großformatigen feuerfesten Steinen ausgekleidet (beispielsweise 0,6 x 0,4 x 0,4 m). Für diese Anwendung wird deshalb eine Verbesserung (Reduzierung) der Sprödigkeit neben einer geringen Korrosionsneigung angestrebt.

Die DE 100 54 125 A1 beschreibt einen Versatz zur Herstellung eines feuerfesten keramischen Produktes. Der Versatz enthält als wesentliche Komponente einen Schmelzphasenbildner, der bei Einsatztemperaturen von 700 bis 1.300° C eine Schmelze/Glasphase bildet. Diese Schmelzphase soll die offene Porosität des Produktes soweit wie möglich ausfüllen, um nach dem Brand ein möglichst dichtes Produkt zu erhalten.

Der Erfindung liegt die Aufgabe zugrunde, ein feuerfestes keramisches Produkt anzubieten, das insbesondere für Hochtemperaturanwendungen (> 1.500° C, insbesondere > 1.700° C) geeignet ist und neben der hohen Temperaturbeständigkeit möglichst viele der nachfolgenden Eigenschaften kumulativ aufweist: eine gute Thermoschockbeständigkeit, eine gute Flexibilität, eine hohe Kaltdruckfestigkeit nach Temperaturwechseln, eine geringe Gasdurchlässigkeit.

Zur Lösung dieser Aufgaben wurden umfangreiche Versuche durchgeführt. Dabei wurden unter anderem folgende Erkenntnisse erzielt:
- Neben der chemischen Zusammensetzung spielt vor allem das Gefüge des gebrannten Produktes eine entscheidende Rolle.
- Der absolute Wert für die offene Porosität ist nicht entscheidend. Entscheidend ist vielmehr, die offene Porosität so auszubilden, dass eine möglichst geringe Gasdurchlässigkeit besteht.
- Offene Porosität einerseits und geringe Gasdurchlässigkeit andererseits lassen sich wiederum über das Gefüge einstellen.
- Diese Anforderungen erfüllt ein Gefüge, welches neben wenigen groben Teilchen überwiegend eine feinteilige Matrix aufweist.
- Der Abstand der Grobteilchen zueinander sollte gräßenordnungsmäßig dem 0,7 bis 3-fachen ihres maximalen Durchmessers entsprechen.
- Die offene Porosität wird dabei ganz überwiegend durch die feinteilige Matrix vorgegeben. Die Poren laufen jedoch an den grobkörnigen Gefügepartikeln aus. Es entsteht jeweils eine Art "Sackpore". Im Ergebnis spielt der zugehörige Porenanteil keine Rolle für die Gasdurchlässigkeit.
- Der Feinkornanteil sollte 5Q bis 90 M.-% (oder: 60 bis 90 M.-%) des Versatzes ausmachen, der Grobkornanteil entsprechend 10 bis 50 M.-% bzw. 10 bis 40 M.-%. Gleichzeitig soll der Anteil an Teilchen mit einer Korngröße zwischen dem Fein- und Grobkorn auf < 10 M.-% des Gesamtversatzes, vorzugsweise < 5 M.-%, beschränkt werden.
- Die sich daraus ergebende Kornlücke ist für den Gefügeaufbau des gebrannten Produktes und dessen Eigenschaften mit entscheidend.
- Der obere Grenzwert für den Feinkornanteil ist größenordnungsmäßig etwa eine Zehnerpotenz kleiner als die untere Grenzkorngröße des grobteiligen Materials. Üblicherweise liegt das feinteilige refraktäre Material in einer Korngröße d₉₀< 100 µm, häufig < 50 µm vor, während die grobteilige refraktäre Komponente eine Korngröße d₉₀> 500 µm, häufig > 1 mm, aufweist.

In ihrer allgemeinsten Ausführungsform betrifft die Erfindung ein gebranntes feuerfestes keramisches Produkt, gemäß Anspruch 1.

Nach einer Ausführungsform beträgt die Grenzkorngröße für das feinteilige refraktäre Material: d₉₀< 50 µm.

Die prozentualen Anteile zwischen feinteiligem und grobteiligem refraktären Material können wie folgt variiert werden: 65 bis 85 : 15 bis 35 oder 70 bis 80 : 20 bis 30 beziehungsweise 75 bis 85 : 15 bis 25, wobei der Anteil an Teilchen mit einer Korngröße zwischen dem Fein- und Grobkornanteil auf Werte < 5 M.-% begrenzt werden kann.

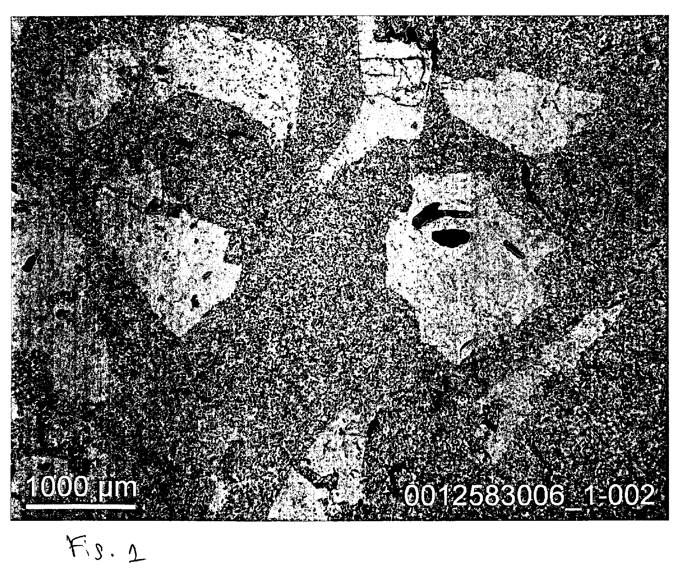

Die spezifische Kornauswahl des Versatzes ist entscheidend für das Gefüge des gebrannten Produktes und dessen Eigenschaften. Die Grob- und Feinfraktion des Versatzes ist am gebrannten Produkt fast immer analog zu erkennen. Zur Herstellung können beide Komponenten in Form von Granalien aufbereitet werden. Einzelne Granalien besitzen dann einen Kern aus dem genannten grobteiligen Material mit einer Umhüllung aus dem genannten feinteiligen Material. Bei der anschließen-den weiteren Aufbereitung kann weiteres Feinmaterial zugemischt werden. Der Versatz kann beispielsweise zu Formteilen verpresst werden. Nach dem Brand, üblicherweise über 1.500° C, meist über 1.700° C, ergibt sich beispielsweise das in Figur 1 dargestellte Gefügebild.

Es zeigt einzelne grobe Teilchen aus Al₂O₃ in einer mehr oder weniger homogenen, feinteiligen Umgebungs-Matrix, die ebenfalls überwiegend aus Al₂O₃ besteht. Schwarze Flächen charakterisieren Poren, die bei der Probenpräparation nicht mit Harz gefüllt wurden. Für dieses Beispiel ergibt sich, dass der Gefügebereich der feinteiligen Matrix eine relativ hohe offene Porosität (von ca. 15 Vol.-%) aufweist. Es ist zu erkennen, dass diese Porosität aus zahlreichen kleinen Poren besteht, wobei die Poren keine, über längere Distanzen verlaufende Kanäle bilden. Vielmehr kommt es im Poren-Netzwerk zu Unterbrechungen und Einschnürungen. Außerdem werden Porenkanäle durch die mehr oder weniger dichten grobkörnigen Versatzkomponenten (weiterer Gefügebereich) unterbrochen. Dadurch ergibt sich bei hoher offener Porosität eine Gasdurchlässigkeit des Produktes, gemessen nach EN 993-4, von < 1•10⁻¹³m².

Damit geht die Erfindung einen völlig anderen Weg gegenüber der DE 100 54 125 A1. Während im Stand der Technik die offenen Poren mit Schmelz-/Gasphase gezielt verfüllt werden, bleibt die offene Porosität bei einem erfindungsgemäßen gebrannten feuerfesten keramischen Produkt auch bei der Anwendung (Anwendungstemperaturen) im Wesentlichen erhalten und in jedem Fall über 10,0 Vol.-%. Dies wird gewünscht, weil die hohe offene Porosität mit entscheidend für die günstige Gefügeelastizität des Produktes ist, wie die nachstehend vorgestellten Ergebnisse des Keilspalttests zeigen. Erfindungsgemäß steht die Abstimmung von Grob- und Feinkorn im Versatz und damit auch im fertigen gebrannten Produkt im Vordergrund.

Die Abstimmung der Versatzkomponenten sowie des anschließenden Brandes des Produktes kann so geführt werden, dass die Poren des fertigen Produktes folgende charakteristische Verteilung aufweisen: Mehr als die Hälfte der Poren hat einen Durchmesser d₉₀< 15 µm und mehr als 1/10 der Poren einen Durchmesser d₉₀> 100 µm, wobei der Porenanteil zwischen 15 und 100 µm maximal 1/7 oder sogar maximal 1/10 der gesamten offenen Porosität beträgt. Der Abstand zwischen den Fein-und Grobporen (oberer beziehungsweise unterer Grenzwert) kann größer oder gleich eine Zehnerpotenz sein. Entsprechend kann die offene Porosität zu mehr als der Hälfte aus Poren mit einem Durchmesser d₉₀< 10 µm bestehen.

Der Versatz wird überwiegend aus oxidischen Komponenten gebildet. Diese umfassen: Al₂O₃, Al₂O₃-ZrO₂, ZrO₂ (stabilisiert, zum Beispiel mit CaO oder MgO, oder unstabilisiert), Mullit, MgO, MgO-Al₂O₃, Cr₂O₃, MgO-Cr₂O₃, SiO₂, Al₂O₃-Cr₂O₃. Der Anteil oxidkeramischer Komponenten mit einer Feuerfestigkeit > 1400°C kann > 80 M.-%, insbesondere > 90 M.-% betragen. Daneben können nicht-oxidische Bestandteile im Versatz vorhanden sein, beispielsweise Carbide, Nitride, Boride oder SiAlONe.

Die Auswahl der Versatzkomponenten soll so erfolgen, dass eine Feuerfestigkeit von mindestens 1.500° C, vorzugsweise > 1.700 bis 1.800° C erreicht wird.

Dabei kann die Werkstoffauswahl so erfolgen, dass auch bei den genannten Brenntemperaturen weniger als 5 M.-% des Versatzes aus Komponenten besteht, die bei diesen Temperaturen Schmelzphase bilden. Daraus ergibt sich dann, dass auch bei der Anwendung entsprechend minimale bis gar keine Schmelzphasenanteile im Produkt entstehen oder vorhanden sind.

Entsprechend können erfindungsgemäße Produkte folgende Produkteigenschaften aufweisen:
- Ein Druckerweichen: [gemäß EN 993-8]: T_{0,5}: > 1500°C, insbesondere >1700°C
- Eine Heißbiegefestigkeit: [gemäß EN 993-7]: bei 1250°C: > 10MPa, insbesondere > 20MPa
- Eine Kaltdruckfestigkeit: [gemäß EN 993-5]: > 50MPa, insbesondere > 80MPa
- Eine Gasdurchlässigkeit: [gemäß EN 993-4]: < 5 x 10⁻¹³m², insbesondere < 1 x 10⁻¹³m²

Die Erfindung wird nachstehend anhand eines Ausführungsbeispieles näher erläutert, welches teilweise in Bezug zu bekannten Produkten gesetzt wird.

Figur 1 zeigt das Gefüge eines bei 1.750° C gebrannten Produktes, welches zu über 90 M.-% aus Aluminiumoxid besteht (Beispiel 1, B1). Zu erkennen sind die groben Al₂O₃-Körner, die nahezu dicht sind. Der Abstand benachbarter grober Al₂O₃-Körner entspricht etwa dem maximalen Durchmesser eines solchen Grobkorns. Zwischen den Grobkörnern ist die feinteilige Al₂O₃-Matrix zu erkennen, die zahlreiche kleine Poren umfasst. Von der gesamten offenen Porosität enthält die feinteilige Matrix deutlich über 90 %.

Der Grobkornanteil macht etwa 20 Vol.-% im Gefüge des gebrannten Produktes aus. Entsprechend ergibt sich das Volumen der feinteiligen Matrix zu etwa 80 %.

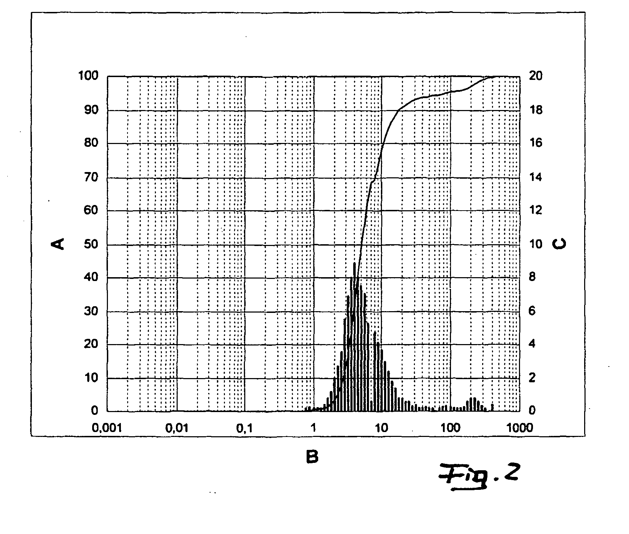

Figur 2 zeigt die Porengrößenverteilung des gesamten Produktes nach Figur 1. Auf der Achse (B) ist der Durchmesser in µm, auf der Achse (A) die relative offene Porosität in %, entlang (C) die Porenverteilung in % aufgetragen. Es ist ein Porenmaximum im Bereich 1 bis 10 µm zu erkennen. Knapp 80 % der gesamten offenen Porosität werden von Poren gebildet, die einen Durchmesser zwischen 1 und 10 µm aufweisen. Ein zweites, deutlich kleiner ausgeprägtes Maximum in der Porengrößenverteilung ergibt sich zwischen 100 und 1.000 µm. Hierbei handelt es sich beispielsweise um singuläre große Poren innerhalb einzelner Teilchen der Grobkorn-Komponente oder flächenartige Poren an der Oberfläche der Grobkörner.

An diesem Produkt wurden folgende Eigenschaftswerte ermittelt:
Offene Porosität: 15,5 Vol.-%
Kaltdruckfestigkeit: > 280 MPa
Heißbiegefestigkeit (1.400° C): 18 MPa
Gasdurchlässigkeit: 0,7 x 10⁻¹³m²
Druckerweichen: T_{0,5} > 1700°C
Die Kaltdruckfestigkeit des Produktes nach 30 Temperaturwechseln gemäß DIN 51068, Teil 1 lag bei ca. 280 MPa (bestimmt gemäß DIN EN 993-5).

Beispiel 2 (B2) betrifft ein erfindungsgemäßes Produkt auf Basis Al₂O₃-ZrO₂. Der Versatz unterscheidet sich vom Versatz gemäß Beispiel 1 dadurch, dass er insgesamt 8 Gew.-% ZrO₂ enthält, und zwar in einer Korngröße < 10 µm, das heißt, das Zirkoniumdioxid ist Bestandteil der feinteiligen Versatzkomponente.

Die Grobkomponente auf Basis Aluminiumoxid wurde, wie beim Beispiel 1, mit dem Feinkorn auf einem Granulierteller umhüllt. Die fertigen Granalien besaßen einen mittleren Durchmesser von ca. 4 mm. Aus den Granalien wurden anschließend Steine der Abmessungen 0,3 x 0,3 x 0,1 m gepresst und bei 1.740° C gebrannt.

Die Rohdichte des Produkts lag bei 3,5 g/cm³. Die offene Porosität betrug 13,5 Vol.-%. Die Heißbiegefestigkeit bei 1.400° C wurde zu 12 MPa bestimmt. Nach 30 Temperaturwechseln analog Beispiel 1 betrug die Kaltdruckfestigkeit 120 MPa.

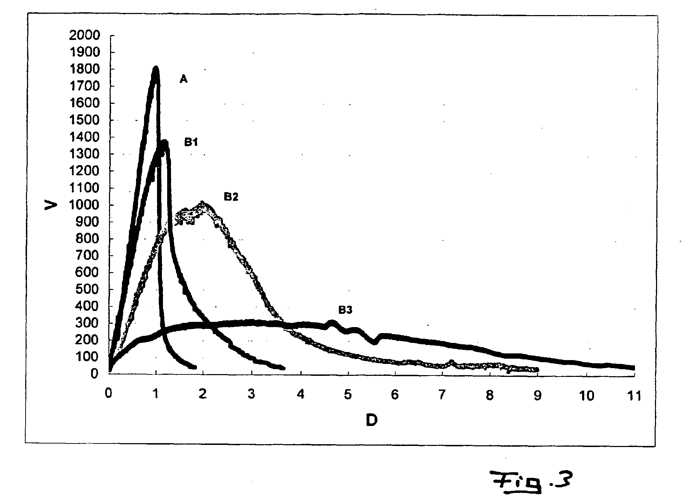

Die Produkte gemäß den Beispielen 1, 2 (B1, B2) wurden anschließend über einen so genannten Keilspalttest geprüft, wie er in WO 2005/085155 A1 beschrieben ist. Figur 3 zeigt die Prüfergebnisse, und zwar im Vergleich mit einem Produkt auf Basis Al₂O₃, welches dem Stand der Technik angehört (Probe A).

Der Keilspalttest wurde bei 1.250° C am gebrannten Produkt durchgeführt. "V" bezeichnet die Vertikallast Fᵥ [N], "D" die Vertikalverschiebung δᵥ [mm].

Die geringere Maximalkraft sowie die Verschiebung der Graphen nach rechts belegt die deutlich erhöhte Gefügeelastizität der erfindungsgemäßen Proben (B1, B2) im Vergleich mit dem Stand der Technik (A).

Dies wird besonders deutlich an der mit B3 bezeichneten Kurve in Fig. 3, die sich auf Beispiel 3 bezieht. Als Grobkorn wurde ein mit 3 M.-% MgO stabilisiertes ZrO₂-Material eingesetzt (Korngröße 0,5-3mm). Das feinteilige refraktäre Material im Versatz bestand aus Al₂O₃. Beim Brand reagiert das feinteilige Al₂O₃ mit dem MgO aus dem Grobkorn und bildet einen Spinellsaum (MgO-Al₂O₃-Spinell) um das Grobkorn. Wie Fig. 3 zeigt wird das Elastizitätsverhalten des bei > 1500°C gebrannten Produkt offensichtlich sehr positiv durch die Mischphase des MA-Spinells beeinflusst. Der Saum scheint für die physikalischen und mechanischen Eigenschaften des gesamten Gefüges wesentlich zu sein. Bei Anwesenheit von Natriumoxid können sich auch Mg-Na-Aluminate in der Schicht um das Grobkorn ausbilden.

Soweit in vorstehender Beschreibung Angaben zur offenen Porosität, zur Porengröße und Porengrößenverteilung der Gesamtprobe gemacht wurden, beziehen sich diese auf entsprechende Definitionen und Bestimmungsmethoden gemäß British Standard BS 1902-3.16: 1990. Messungen mittels Quecksilber-Druck-Porosimetrie nach dieser Norm erfolgten mit einem Gerät des Typs Micromeritics Auto Pore IV, 9400 V 105 bei 10 Sekunden Äquilibrierungszeit (Ausgleichsphase) je Druckstufe (Druckniveau).

Neben den Porengrößen und der Porengrößenverteilung wurde aus dem aus den Messungen erhaltenen offenen Porenvolumen auch die Rohdichte der Gesamtprobe ermittelt, wie in der Norm angegeben, so dass sich die angegebenen Dichte-Werte ebenfalls auf diese Norm beziehen.

Die Bestimmung von Korngrößen im Gefüge mittels Auflichtmikroskopie und deren Korrelation mit den Volumenanteilen der betroffenen Phasen erfolgt mit der in Radex-Rundschau 1988, Heft 4, Seiten 172-182 beschriebenen Methode. Zur Bestimmung der offenen Porosität innerhalb einzelner Gefügebereiche (siehe Ansprüche 12, 13) dient diese Methode mit der Maßgabe, dass nur solche Poren erfasst werden, die im Schliffbild eine Länge größer 1 µm aufweisen.

## Patentansprüche

1. Gebranntes feuerfestes keramisches Produkt mit einer offenen Porosität > 10,0- vol% und bis zu 30 vol-%, hergestellt aus einem Versatz, der weniger als 5 M.-% Komponenten enthält, die bei Anwendungstemperatur bis 1.500° C Schmelzphase bilden, und neben 50-90 M.-% feinteiligem refraktärem Material mit einer Korngröße d₉₀<100µm weitere 10-50 M.-% grobteiliges refraktäres Material mit einer Korngröße d₉₀ > 500µm aufweist und der Anteil an Teilchen mit einer Korngröße d₉₀ zwischen 100-500 µm auf ≤ 10 M.-% begrenzt ist.

2. Produkt nach Anspruch 1, hergestellt aus einem Versatz, dessen feinteiliges Material eine Korngröße d₉₀ < 50 µm aufweist.

3. Produkt nach Anspruch 1, hergestellt aus einem Versatz, der neben 65-85 M.-% feinteiligem Material weitere 15-35 M.-% grobteiliges Material aufweist.

4. Produkt nach Anspruch 1, hergestellt aus einem Versatz, dessen Anteil an Teilchen mit einer Korngröße d₉₀ zwischen dem feinteiligen und dem grobteiligen Material auf ≤ 5 M.-% begrenzt ist.

5. Produkt nach Anspruch 1 mit einer Gasdurchlässigkeit < 5 x 10⁻¹³m².

6. Produkt nach Anspruch 5, bei dem die offene Porosität zu mehr als der Hälfte aus Poren mit einem Durchmesser d₉₀ < 15µm und zu mehr als 1/10 aus Poren mit einem Durchmesser d₉₀ > 100µm besteht, wobei der Porenanteil zwischen 15 und 100µm maximal 1/7 offenen Porosität beträgt.

7. Produkt nach Anspruch 6, dessen offene Porosität zu mehr als der Hälfte aus Poren mit einem Durchmesser d₉₀ < 10µm besteht.

8. Produkt nach Anspruch 6, wobei der Porenanteil zwischen 15 und 100 µm maximal 1/10 der offenen Porosität beträgt.

9. Produkt nach Anspruch 1, das mindestens einen der folgenden Prüfwerte erfüllt:
a) Druckerweichen gemäß EN 993-8 > 1.500°C, insbesondere > 1.700° C
b) Heißbiegefestigkeit gemäß EN 993-7 bei 1.400° C > 10 MPa
c) Kaltdruckfestigkeit gemäß EN 993-5 > 50, insbesondere > 80 MPa

10. Produkt nach Anspruch 1, hergestellt aus einem Versatz, der mindestens eine der folgenden oxidischen Materialien enthält: Al₂O₃, Al₂O₃-ZrO₂, ZrO₂, Mullit, MgO, MgO-Al₂O₃, Cr₂O₃, MgO-Cr₂O₃, SiO₂, Al₂O₃-Cr₂O₃.

11. Produkt nach Anspruch 1, hergestellt aus einem Versatz, der mindestens eine der folgenden nicht-oxidischen Materialien enthält: Carbid, Nitrid, Borid, SiAlON.

## Claims

1. Fired, refractory ceramic product, having an open porosity > 10 % by volume and up to 30 % by volume, produced from a batch which contains less than 5 % by weight of components which form molten phase at an application temperature of up to 1.500°C and which, in addition to 50-90% by weight of fine particulate refractory material with a grain size of d₉₀<100 µm, contains another 10-50 % by weight of coarse particulate refractory material with a grain size of d₉₀> 500 µm, and the proportion of particles with a grain size d₉₀ of between 100-500 µm is limited to ≤ 10 % by weight.

2. Product as claimed in claim 1, produced from a batch in which the fine particulate material has a grain size of d₉₀ < 50 µm.

3. Product as claimed in claim 1, produced from a batch which, in addition to 65-85 % by weight of fine particulate material, contains another 15-35 % by weight of coarse particulate material.

4. Product as claimed in claim 1, produced from a batch in which the proportion of particles with a grain size d₉₀ between the fine particulate and the coarse particulate material is limited to < 5 % by weight.

5. Product as claimed in claim 1, with a permeability to gas of < 5 x 10⁻¹³m².

6. Product as claimed in claim 5, in which more than half of the open porosity is made up of pores with a diameter d₉₀ < 15 µm and more than 1/10 is made up of pores with a diameter d₉₀ > 100 µm, and the proportion of pores between 15 and 100 µm accounts for at most 1/7 of the open porosity.

7. Product as claimed in claim 6, in which more than half of the open porosity is made up of pores with a diameter d₉₀ < 10 µm.

8. Product as claimed in claim 6, in which the proportion of pores between 15 and 100 µm accounts for at most 1/10 of the open porosity.

9. Product as claimed in claim 1, which satisfies at least one of the following test values:
a) refractoriness-under-load as specified in EN 993-8 > 1,500°C, in particular > 1,700°C
b) modulus of rupture as specified by EN 993-7 at 1,400°C > 10 MPa
c) cold crushing strength as specified by EN 993-5 > 50, in particular > 80 MPa.

10. Product as claimed in claim 1, produced from a mixture containing at least one of the following oxidic materials: Al₂O₃, Al₂O₃-ZrO₂, ZrO₂, mullite, MgO, MgO-Al₂O₃, Cr₂O₃, MgO-Cr₂O₃, SiO₂, Al₂O₃-Cr₂O₃.

11. Product as claimed in claim 1, produced from a mixture which contains at least one of the following non-oxidic materials: carbide, nitride, boride, SiAlON.

## Revendications

1. Produit céramique réfractaire cuit, avec une porosité ouverte > 10,0 % en volume et de jusqu'à 30 % en volume, fabriqué à partir d'une pâte, qui contient moins de 5 % en masse de composants, qui à la température d'utilisation jusqu'à 1.500 °C forment une phase fondue, et qui hormis de 50 à 90 % en masse de matière réfractaire à particules fines d'une grosseur de grains d₉₀ < 100µm présente en outre de 10 à 50 % en masse de matière réfractaire à particules grossières d'une grosseur de grains d₉₀ > 500 µm et dont la part en particules d'une grosseur de grains d₉₀ comprise entre 100 et 500 µm est limitée à ≤ 10 % en masse.

2. Produit selon la revendication 1, fabriqué à partir d'une pâte, dont la matière à particules fines présente une grosseur de grains d₉₀ < 50 µm.

3. Produit selon la revendication 1, fabriqué à partir d'une pâte, qui hormis de 65 à 85 % en masse de matière à particules fine, présente de 15 à 35 % en masse de matière à particules grossières.

4. Produit selon la revendication 1, fabriqué à partir d'une pâte, dont la part en particules d'une grosseur de grains d₉₀ entre la matière à particules fines et la matière à particules grossières est limitée à < 5 % en masse.

5. Produit selon la revendication 1 avec une perméabilité au gaz < 5 x 10⁻¹³m².

6. Produit selon la revendication 5, sur lequel la porosité ouverte consiste pour plus de la moitié dans des pores d'un diamètre d₉₀ < 15 µm et pour plus de 1/10 dans des pores d'un diamètre d₉₀ > 100 µm, la part de pores compris entre 15 et 100 µm s'élevant à un maximum de 1/7 de la porosité ouverte.

7. Produit selon la revendication 6, dont la porosité ouverte consiste pour plus de la moitié dans des pores d'un diamètre d₉₀ < 10 µm.

8. Produit selon la revendication 6, la part de pores comprise en 15 et 100 µm s'élevant au maximum à 1/10 de la porosité ouverte.

9. Produit selon la revendication 1, satisfaisant à au moins l'une des valeurs expérimentales suivantes :
a) Ramollissement sous pression selon la norme EN 993-8 > 1.500°C, notamment > 1.700° C
b) Résistance à la flexion à chaud selon la norme EN 993-7 à 1.400° C > 10 MPa
c) Résistance à froid sous charge selon la norme EN 993-5 > 50, notamment > 80 MPa

10. Produit selon la revendication 1, fabriqué à partir d'une pâte, qui contient au moins l'une des matières oxydiques suivantes : Al₂O₃, Al₂O₃-ZrO₂, ZrO₂, Mullit, MgO, MgO-Al₂O₃, Cr₂O₃, MgO-Cr₂O₃, SiO₂, Al₂O₃-Cr₂O₃.

11. Produit selon la revendication 1, fabriqué à partir d'une pâte, qui contient au moins l'une des matières non oxydiques suivantes : carbure, nitrure, borure, SiAlON.
